(19) Europäisches Patentamt
European Patent Office
Office européen des brevets

(11) **EP 4 374 050 B1**

(12) **EUROPÄISCHE PATENTSCHRIFT**

(45) Veröffentlichungstag und Bekanntmachung des Hinweises auf die Patenterteilung:
**26.02.2025 Patentblatt 2025/09**

(21) Anmeldenummer: **22751719.0**

(22) Anmeldetag: **20.07.2022**

(51) Internationale Patentklassifikation (IPC):
**F01N 3/022** (2006.01)     **F01N 3/08** (2006.01)
**F01N 3/10** (2006.01)     **F01N 13/00** (2010.01)

(52) Gemeinsame Patentklassifikation (CPC):
**F01N 3/101; F01N 3/0222; F01N 3/0828;**
**F01N 13/0093;** F01N 3/0814; F01N 2330/06;
F01N 2340/02; F01N 2370/04; F01N 2370/24;
F01N 2510/063; F01N 2570/18; Y02T 10/12

(86) Internationale Anmeldenummer:
**PCT/EP2022/070285**

(87) Internationale Veröffentlichungsnummer:
**WO 2023/001863 (26.01.2023 Gazette 2023/04)**

(54) **ABGASREINIGUNGSSYSTEM ZUR REINIGUNG VON ABGASEN VON BENZINMOTOREN**

EXHAUST GAS PURIFICATION SYSTEM FOR PURIFYING EXHAUST GAS OF GASOLINE ENGINES

SYSTÈME DE PURIFICATION DES GAZ D'ÉCHAPPEMENT POUR LA PURIFICATION DES GAZ D'ÉCHAPPEMENT DES MOTEURS À ESSENCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.07.2021 DE 102021118802**

(43) Veröffentlichungstag der Anmeldung:
**29.05.2024 Patentblatt 2024/22**

(73) Patentinhaber: **Umicore AG & Co. KG**
**63457 Hanau-Wolfgang (DE)**

(72) Erfinder:
• SCHOENHABER, Jan
 64287 Darmstadt (DE)
• RICHTER, Joerg-Michael
 60389 Frankfurt (DE)
• BRAUN, Carolin
 63225 Langen (DE)
• PALM, Tim
 63549 Ronneburg (DE)

(56) Entgegenhaltungen:
WO-A1-2011/131324   WO-A1-2020/069548
DE-A1- 102016 112 657   DE-A1- 102019 204 744
US-A1- 2010 107 606   US-B2- 10 066 576
US-B2- 10 914 217

## Beschreibung

Die vorliegende Erfindung richtet sich auf die Reinigung von Abgasen eines überwiegend mit stöchiometrischem Kraftstoffgemisch betriebenen Verbrennungsmotors. Das Abgassystem weist insbesondere 4 Reinigungsfunktionen in einer bestimmten Reihenfolge auf. Ein motornaher TWC1 (Drei-Wege-Katalysator) wird gefolgt von einem GPF (Benzinpartikelfilter) und einem dahinter angeordneten weiteren TWC2. Das System weist zusätzlich eine ammoniakspeichernde Funktionalität auf.

Abgase von mit überwiegend (>50% der Betriebszeit) stöchiometrischem Luft/KraftstoffGemisch betriebenen Verbrennungsmotoren, also z. B. mit Benzin oder Erdgas betriebene Ottomotoren, werden in herkömmlichen Verfahren mit Hilfe von Drei-Wege-Katalysatoren (three-way-catalyst; TWC) gereinigt. Diese sind in der Lage, die drei wesentlichen gasförmigen Schadstoffe des Motors, nämlich Kohlenwasserstoffe, Kohlenmonoxid und Stickoxide, gleichzeitig zu unschädlichen Komponenten umzusetzen. Stöchiometrisch heißt, dass im Mittel genau so viel Luft zur Verbrennung des im Zylinder vorhandenen Kraftstoffs zur Verfügung steht, wie für eine vollständige Verbrennung benötigt wird. Das Verbrennungsluftverhältnis $\lambda$ (A/F-Verhältnis; Luft/Kraftstoffverhältnis) setzt die tatsächlich für eine Verbrennung zur Verfügung stehende Luftmasse $m_{L,tats}$ ins Verhältnis zur stöchiometrischen Luftmasse $m_{L,st}$:

$$\lambda = \frac{m_{L,tats}}{m_{L,st}}$$

Ist $\lambda$ < 1 (z. B. 0,9) bedeutet dies "Luftmangel", man spricht von einem fetten Abgasgemisch, $\lambda$ > 1 (z. B. 1,1) bedeutet "Luftüberschuss" und das Abgasgemisch wird als mager bezeichnet. Die Aussage $\lambda$ = 1,1 bedeutet, dass 10% mehr Luft vorhanden ist, als zur stöchiometrischen Reaktion notwendig wäre.

Als katalytisch aktive Materialien werden in den Drei-Wege-Katalysatoren in der Regel Platingruppenmetalle, insbesondere Platin, Palladium und Rhodium eingesetzt, die beispielsweise auf $\gamma$-Aluminiumoxid als Trägermaterial vorliegen. Daneben enthalten Dreiwege-Katalysatoren Sauerstoffspeichermaterialien, beispielsweise Cer/Zirkonium-Mischoxide. In letzteren stellt Ceroxid, ein Seltenerdmetalloxid, die für die Sauerstoffspeicherung grundlegende Komponente dar. Neben Zirkoniumoxid und Ceroxid können diese Materialien zusätzliche Bestandteile wie weitere Seltenerdmetalloxide oder Erdalkalimetalloxide enthalten. Sauerstoffspeichermaterialien werden durch Aufbringen von katalytisch aktiven Materialien wie Platingruppenmetallen aktiviert und dienen somit auch als Trägermaterial für die Platingruppenmetalle.

Derartige katalytisch aktive Materialien samt Inhaltsstoffen werden durch einen Beschichtungsprozess auf z.B. Durchflusssubstrate aufgebracht. Nach dem Trocknen und Kalzinieren der Substrate können diese in das Abgassystem eingebaut werden. Durchflusssubstrate sind aus keramischen Materialien, wie z.B. Siliciumcarbid, Aluminiumtitanat und Cordierit aufgebaut und seit längerem bewährt. Sie sind aus einer Vielzahl von parallelen Kanälen aufgebaut, die durch poröse Wände gebildet werden. Die Kanäle sind an beiden Enden des Durchflusssubstrats offen. Das Abgas fließt so vom Einlassbereich zum Auslassbereich und kontaktiert dabei das auf den Wänden aufgebrachte katalytisch aktive Material.

Neben den gasförmigen Schadstoffen enthält das Abgas von derartigen Verbrennungsmotoren aber auch feinste Partikel (PM), die aus der unvollständigen Verbrennung des Kraftstoffs resultieren und im Wesentlichen aus Ruß bestehen. Im Unterschied zur Partikelemission von Dieselmotoren sind die Partikel im Abgas stöchiometrisch betriebener Verbrennungsmotoren, wie Ottomotoren, sehr klein und weisen eine durchschnittliche Partikelgröße kleiner 1 $\mu$m auf. Typische Partikelgrößen liegen im Bereich von 10 nm bis 200 nm. Des Weiteren ist die emittierte Partikelmenge sehr gering und bewegt sich im Bereich von 2 mg/km bis 4 mg/km.

Im Bereich der Reinigung von Abgas von mager betriebenen Motoren, also insbesondere von Dieselmotoren, haben sich Partikelfilter aus keramischen Materialien, wie z.B. Siliciumcarbid, Aluminiumtitanat und Cordierit seit längerem bewährt. Diese sind aus einer Vielzahl von parallelen Kanälen aufgebaut, die durch poröse Wände gebildet werden. Die Kanäle sind wechselseitig an einem der beiden Enden des Filters verschlossen, so dass Kanäle A gebildet werden, die an der ersten Seite des Filters offen und auf der zweiten Seite des Filters verschlossen sind, sowie Kanäle B, die an der ersten Seite des Filters verschlossen und auf der zweiten Seite des Filters offen sind. Das beispielsweise in die Kanäle A einströmende Abgas kann den Filter nur über die Kanäle B wieder verlassen, und muss zu diesem Zweck durch die porösen Wände zwischen den Kanälen A und B durchfließen. Beim Durchtritt des Abgases durch die Wand werden die Partikel zurückgehalten und das Abgas gereinigt. Bei derartigen Aggregaten spricht man von Wandflussfiltern.

Die so zurückgehaltenen Partikel müssen nachfolgend abgebrannt bzw. oxidiert werden, um ein Verstopfen des Filters bzw. einen inakzeptablen Anstieg des Gegendrucks des Abgassystems zu verhindern. Zu diesem Zweck kann beispielsweise das Wandflussfilter mit katalytisch aktiven Beschichtungen versehen werden, die die Zündtemperatur von Ruß herabsetzen. Es ist bereits bekannt, solche Beschichtungen auf die porösen Wände zwischen den Kanälen aufzubringen (sogenannte auf-Wand-Beschichtung) oder in die porösen Wände einzubringen (sogenannte in-Wand-Beschichtung). Die EP1657410A2 beschreibt auch bereits eine Kombination beider Beschichtungsarten, d. h. ein Teil des katalytisch aktiven Materials liegt in den porösen Wänden und ein anderer Teil auf den porösen Wänden vor.

Das Konzept, Partikel mittels Wandflussfiltern aus dem Abgas zu entfernen, ist bereits auf die Reinigung von Abgas von mit stöchiometrischem Luft/Kraftstoff-Gemisch betriebenen Verbrennungsmotoren übertragen worden, siehe zum Beispiel die EP2042226A2 (gasoline particle filter; GPF). Gemäß deren Lehre trägt ein Wandflussfilter zwei übereinander angeordnete Schichten, wobei eine in der porösen Wand und die andere auf der porösen Wand angeordnet sein kann.

Die europäische Abgasgesetzgebung sieht seit Inkrafttreten der Stufe Euro 6c ab September 2017 Abgasmessungen unter realen Bedingungen auf der Straße vor (Real Driving Emissions; RDE). Je nach Fahrbedingungen können dadurch deutlich höhere Anforderungen an den Katalysator entstehen, insbesondere im Hinblick auf die dynamische Umsetzung von Kohlenmonoxid und Stickoxiden. In den momentan gültigen Abgasnormen müssen die Schadstoffe wie HC, CO, NOx und Partikel die Grenzwerte der Euro 6d-Norm unter RDE-Bedingungen auch für alle Neufahrzeuge einhalten. Hinzu kommt, dass ein gewisser $CO_2$-Flottengrenzwert nicht überschritten werden sollte. Zukünftige Abgasnormen in Europa und der Welt werden sicherlich noch anspruchsvollere Anforderungen an die Verbrennungsmotoren und deren Abgasaufbereitung stellen.

Es ist davon auszugehen, dass für derartige Normen einfache Katalysatoren und/oder Filter nicht mehr ausreichend sein werden. Daher werden auch im Bereich der überwiegend stöchiometrisch betriebenen Verbrennungsmotoren komplexere Abgassysteme Einzug halten müssen. Exemplarisch sei auf die EP3639919A1 verwiesen, in der ein Abgassystem bestehend aus einem ersten TWC gefolgt von einem GPF und einem weiteren TWC abstromseitig vom GPF vorgeschlagen wurde. Mittels dieser Systeme muss es dann gewährleistet werden, eine ausreichende katalytische Aktivität und Filtrationseffizienz mit einem möglichst geringen Abgasgegendruck zu kombinieren. Insbesondere der Abgasgegendruck eines entsprechenden Systems führt zu einem erhöhten Verbrauch an Kraftstoff, was sich negativ auf die $CO_2$-Performance auswirkt. Darüber hinaus kommen in zukünftigen Abgasnormen auch mehr und mehr sekundäre Emissionen wie das giftige $NH_3$ oder klimaschädliches $N_2O$ in den Blick. Alle diese Aspekte sollte ein entsprechendes zukünftiges Abgassystem adressieren können.

Abgasreinigungssysteme von Verbrennungsmotoren werden in den folgenden Publikationen beschrieben: DE 10 2016 112657 A1, WO 2011/131324 A1, WO 2020/069548 A1, US 10 066 576 B2, US 10 914 217 B2, DE 10 2019 204744 A1 oder US 2010/107606 A1.

Es besteht daher weiterhin ein Bedarf an Abgasreinigungssystemen für überwiegend mit stöchiometrischen Kraftstoffgemischen betriebenen Verbrennungsmotoren, die im Stande sind, alle erforderlichen schädlichen Bestandteile des Abgases dieser Motoren in höchst möglicher Weise zu beseitigen und dabei einen möglichst geringen Mehrverbrauch an Kraftstoff bedingen.

Diese und weitere sich aus dem Stand der Technik für den Fachmann ergebenden Aufgaben werden von einem Abgassystem gemäß vorliegender Erfindung gelöst. Dadurch, dass man in einem Abgasreinigungssystem zur Reinigung von Abgasen eines überwiegend stöchiometrisch betriebenen Verbrennungsmotors aufweisend einen motornahen TWC1 auf einem Durchflusssubstrat, einen abstromseitig zum TWC1 angebrachten GPF als Wandflussfilter und abstromseitig zum GPF einen weiteren TWC2 auf einem Durchflusssubstrat, das System dahingehend modifiziert, dass es zusätzlich Materialien zum temporären Speichern von Ammoniak aufweist, gelangt man äußerst überraschend und vorteilhaft zur Lösung der gestellten Aufgaben.

Unter dem Begriff "temporär" wird erfindungsgemäß verstanden, dass das Material in bestimmten Betriebszuständen des Abgassystems Ammoniak einspeichern kann und unter anderen diesen wieder abgibt bzw. keinen mehr aufnimmt. Das Speichermaterial selbst wird hierdurch nicht verändert. So kann das Material z.B. bei niedrigen Temperaturen den im System gebildeten Ammoniak einspeichern und bei erhöhten Temperaturen wieder abgeben bzw. umsetzen (siehe hierzu weiter unten). Damit steht das Speichermaterial dann für eine weitere Einspeicherung von Ammoniak wieder zur Verfügung. Die Etablierung eines Materials zum Speichern von Ammoniak in dem oben dargestellten System stellt eine optimale Kombination von vier funktionalen Abgasreinigungskomponenten dar, die zukünftige Abgasgrenzwerte einzuhalten erlaubt und darüber hinaus die Möglichkeit eröffnet, ein hohes Maß an Schadstoffreduktion im System zu realisieren.

Durch die zusätzliche Speicherfunktion kann im System durch die Überreduktion von Stickoxiden entstehender Ammoniak abgefangen und eingespeichert werden. Er gelangt so nicht in die Umwelt. Sofern es die Betriebszustände des Abgasreinigungssystems zulassen, wird der Ammoniak desorbiert und z.B. über einem TWC zu Stickstoff oxidiert.

Die Arbeitsweise der Ammoniakspeicherfunktion beruht darauf, dass sie Ammoniak in Betriebszuständen des Abgasreinigungssystems zwischenspeichern kann, in denen Ammoniak entsteht, aber nicht von herkömmlichen Dreiwegekatalysatoren umgesetzt werden kann, beispielsweise durch Mangel an Sauerstoff oder ungenügende Betriebstemperatur. Der so gespeicherte Ammoniak kann dann bei verändertem Betriebszustand des Abgasreinigungssystems ausgespeichert und anschließend oder direkt umgesetzt werden, beispielsweise wenn genügend Sauerstoff vorhanden ist.

Die Speicherfähigkeit des Katalysatorsubstrats für Ammoniak kann nach Maßgabe der weiter hinten genannten Vorgehensweise bestimmt werden. Die im Rahmen dieser Erfindung angesprochene Ammoniakspeicherfähigkeit bzw.

-kapazität wird als Quotient aus gespeicherter Masse Ammoniak pro Liter Katalysatorsubstratvolumen angegeben. Durch das zusätzliche Material zur temporären Speicherung von Ammoniak sollte die Ammoniakspeicherfähigkeit des Abgasreinigungssystems auf mindestens 0,25 g Ammoniak pro L Substratvolumen erhöht werden (gemessen im Frischzustand). Insgesamt sollte die Speicherkapazität der eingesetzten Ammoniakspeicherkomponenten ausreichen, damit im System zwischen 0,25 und 10,0 g $NH_3$ pro Liter Substratvolumen, bevorzugt zwischen 0,5 und 8,0 g $NH_3$ pro Liter Substratvolumen und besonders bevorzugt zwischen 0,5 und 5,0 g $NH_3$/Liter Substratvolumen Ammoniak gespeichert werden kann (immer bezogen auf den Frischzustand). Diese, das Ammoniak temporär speichernden Materialen sind in einer ausreichenden Menge im Abgassystem vorhanden. Als bevorzugte Menge hat sich ein Wert von 50 - 350 g/L, vorzugsweise 75 - 300 g/L und ganz bevorzugt 100 - 250 g/L Substratvolumen erwiesen. Als Substratvolumen wird das Volumen des Substrats herangezogen, auf dem sich das Speichermaterial befindet.

Für die temporäre Speicherung von Ammoniak können dem Fachmann geläufige Materialien herangezogen werden. Vorzugsweise sind dies Zeolithe, wie z.B. Mordenite (MOR), Y-Zeolithe (FAU), ZSM-5 (MFI), Ferrierite (FER), Chabazite (CHA), AEI, LEV und β-Zeolithe (BEA) sowie zeolithähnlichen Materialien, wie z.B. Aluminiumphosphate (AIPO) und Siliziumaluminiumphosphat (SAPO) oder Mischungen davon (EP0324082A1). Materialien, welche sich für die Anwendung zur Speicherung von $NH_3$ als besonders günstig erwiesen haben, sind in der US2006/0010857AA bzw. WO2004076829A1 benannt. Besonders bevorzugt werden ZSM-5 (MFI), Chabazite (CHA), Levyn (LEV), Ferrierite (FER), SAPO-34 und β-Zeolithe (BEA) eingesetzt. Ganz besonders bevorzugt werden CHA, LEV, BEA und AIPO-34 bzw. SAPO-34 verwendet. Äußerst bevorzugt werden Materialien des CHA-Typs oder des BEA-Typs verwendet. Diese Materialien sind, um eine verbesserte Speicheraktivität zu gewährleisten, vorzugsweise mit Übergangsmetallen aus der Gruppe bestehend aus Eisen, Kupfer, Mangan und Silber versehen. Ganz besonders vorteilhaft sind Kupfer und Eisen in diesem Zusammenhang zu nennen. Der Fachmann weiß dabei, wie er die Zeolithe oder das zeolithähnliche Material mit den Übergangsmetallen zu versehen hat (PCT/EP2012/061382 sowie dort zitierte Literatur), um eine gute Aktivität gegenüber der Reduktion von Stickoxiden mit Ammoniak bereitstellen zu können.

Unter dem Begriff "Zeolith" versteht man poröse Materialien mit einer Gitterstruktur aus eckenverknüpften $AlO_4$ und $SiO_4$-Tetraedern gemäß der allgemeinen Formel (W.M. Meier, Pure & Appl. Chem., Vol. 58, No. 10, pp. 1323-1328, 1986):

$$M_{m/z} [m\ AlO_2 * n\ SiO_2] * q\ H_2O$$

Die Struktur eines Zeolithen umfasst somit ein aus Tetraedern aufgebautes Netzwerk, das Kanäle und Hohlräume umschließt. Man unterscheidet natürlich vorkommende und synthetisch hergestellte Zeolithe.

Unter dem Begriff "zeolithähnliche Verbindung" wird im Rahmen dieser Schrift eine Verbindung verstanden, die denselben Strukturtyp aufweist, wie eine natürlich vorkommende oder eine synthetisch hergestellte Zeolithverbindung, die sich von solchen jedoch dadurch unterscheidet, dass die entsprechende Käfigstruktur nicht ausschließlich aus Aluminium- und Siliziumgerüstatomen aufgebaut ist. In solchen Verbindungen werden die Aluminium- und/oder Siliziumgerüstatome anteilig durch andere drei-, vier- oder fünfwertige Gerüstatome wie beispielsweise B(III), Ga(III), Ge(IV), Ti(IV) oder P(V) ersetzt. In der Praxis am häufigsten zur Anwendung kommt der Ersatz von Aluminium- und/oder Siliziumgerüstatomen durch Phosphoratome, beispielsweise in den Siliziumaluminiumphosphaten oder in den Aluminiumphosphaten, die in Zeolithstrukturtypen kristallisieren. Prominente Beispiele sind das in Chabazitstruktur kristallisierende Siliziumaluminiumphosphat SAPO-34 und das in Chabazitstruktur kristallisierende Aluminiumphosphat AlPO-34.

Der besondere Vorteil des erfindungsgemäßen Einsatzes von übergangsmetallausgetauschten Zeolithen bzw. zeolithähnlichen Verbindungen ist die Möglichkeit, dass diese Substanzen zugleich im Stande sind, im Abgas vorhandene Stickoxide und den eingespeicherten Ammoniak zu Stickstoff zu komproportionieren. In diesem Fall wirkt der Ammoniakspeicher wie ein Katalysator zur selektiven Reduktion (WO2008106518A2). Des Weiteren kann es von Vorteil sein, wenn diesem SCR-Katalysator noch eine Funktion zur Oxidation von Ammoniak zu Stickstoff beigefügt wird (WO2008106519A1). Vorteilhaft ist daher, dass die Materialien zum temporären Speichern von Ammoniak ebenfalls Katalysatoren zur Oxidation von $NH_3$ zu $N_2$ aufweisen. Als solches handelt es sich dann vorliegend um einen Ammoniakoxidationskatalysator (AMOX) bzw. einen Ammoniaksperrkatalysator (US5120695; EP1892395A1; EP1882832A2; EP1876331A2; WO12135871A1; US2011271664AA; WO11110919A1). Sofern zur Oxidation des eingespeicherten Ammoniaks nicht genügend Stickoxide im System vorhanden sein sollten, kann der Ammoniak über dem AMOX auch mit vorhandenem Sauerstoff zu Stickstoff umgesetzt werden. In beiden Fällen - als SCR-Katalysator oder AMOX - erfolgt keine Abgabe von Ammoniak an die Umwelt.

Das den Ammoniak temporär speichernde Material kann im Abgasreinigungssystem auf einem oder den schon vorhandenen Aggregaten verteilt werden. Hierbei kann das entsprechende Material im Verhältnis zu den ggf. schon vorhandenen katalytisch aktiven Materialien vergesellschaftet mit diesen oder in Zonen oder Schichten getrennt zu diesen auf einem oder mehreren Substraten vorliegen. Als solches bietet es sich an, das Ammoniak temporär speichernde Material überwiegend auf den TWC2 zu verorten. Sofern im System in den Aggregaten TWC1 bzw. GPF Ammoniak gebildet werden sollte, so kann dieser auf dem abstromseitig positionierten TWC2 entsprechend eingespeichert bzw. umgewandelt werden. Da der TWC2 vom Motorauslass entsprechend weiter entfernt ist, ist die Temperaturbelastung hier moderater, was einer besseren Speicherung Vorschub leistet.

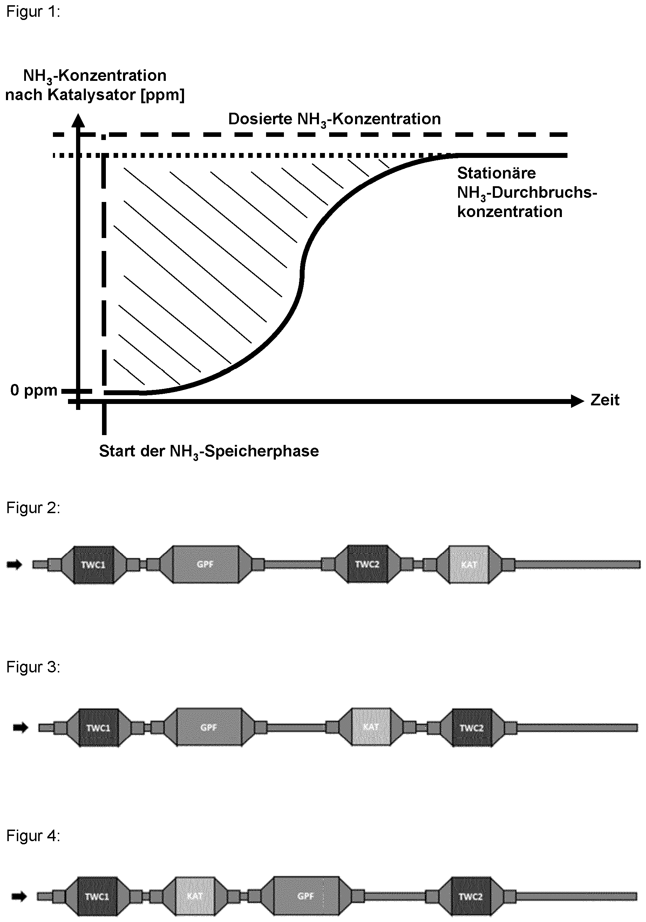

Erfindungsgemäß ist das den Ammoniak temporär speichernde Material je auf einem separaten Durchfluss-substrat angeordnet. Hierbei kann dieses Durchflusssubstrat (KAT) nach dem Fachmann bekannten Gesichtspunkten im Abgasreinigungssystem angeordnet werden (siehe Fig. 2 - Erfindungsgemäß ist der KAT abstromseitig zum TWC2 angeordnet. Die Vorteile sind die gleichen wie oben für die Verortung des entsprechenden Materials auf den TWC2 genannten. Damit ist der KAT - wie der TWC2 - vorzugsweise im Unterboden des Fahrzeugs angesiedelt. Alternativ kann der KAT allerdings auch aufstromseitig zum TWC2 und abstromseitig zum TWC1 und vor oder hinter den GPF beheimatet werden. Insbesondere scheint es bei dieser letztgenannten Kombination von Vorteil zu sein, wenn der KAT in einer Entfernung von 30 - 250 cm, vorzugsweise 40 - 200 cm und ganz bevorzugt 50 - 180 cm abstromseitig zum Ausgang des TWC1 angeordnet ist.

Generell hat es sich als vorteilhaft erwiesen, wenn die einzelnen Substrate des erfindungsgemäßen Abgasreinigungssystems (TWC1, GPF, TWC2, KAT) hinsichtlich der Größe des Volumens, dass sie einnehmen, in einem bestimmten Verhältnis zueinander stehen. So ist von Vorteil, wenn der TWC1 einen Anteil des Volumens am Gesamtsystem einnimmt, welcher zwischen 20 und 50 Vol.-%, bevorzugt 30 - 40 Vol.-% liegt. Das GPF sollte einen Volumenanteil von 20 - 60 Vol.-%, bevorzugt 25 - 55 Vol.-% bezogen auf das Gesamtsystem aufweisen. Gleichfalls sollte der Anteil von TWC2 am Gesamtsystem 10 - 40 Vol.-%, bevorzugt 15 - 35 Vol.-% betragen. Der Kat aufweisend das Material zum temporären Speichern von Stickoxiden besitzt einen Anteil von vorzugsweise 5 - 30 Vol.-%, mehr bevorzugt 10 - 30 Vol.-% an dem Gesamtvolumen der Substrate im Abgasreinigungssystem. Unter Gesamtsystem wird hier die Summe der Volumina berechnet aus den Außenmaßen der Substrate von TWC1, GPF, TWC2 und KAT verstanden.

Der KAT weist eine relativ hohe Washcoatbeladung in g/L auf, die von 100 - 500 g/L, bevorzugt 125 - 450 g/L und ganz bevorzugt 150 - 400 g/L reicht. Der Aufbau des KAT entspricht in einer Ausgestaltung dem eines SCR-Katalysators oder vorzugsweise dem eines wie weiter oben schon beschriebenen AMOX-Katalysators. Letzterer besitzt eine Oxidationsfunktion, um Ammoniak im Abgas zu Stickstoff oxidieren zu können. Bei derartigen Katalysatoren hat es sich als vorteilhaft erwiesen, wenn diese in einem zonierten und/oder geschichteten Aufbau vorliegen. Z.B. hat es sich als günstig herausgestellt, wenn KAT eine zumindest teilweise untere auf dem Substrat aufgebrachte Schicht mit einer Oxidationsfunktion für die Oxidation von $NH_3$ zu $N_2$ aufweist und auf dieser Schicht zumindest teilweise eine weitere Schicht mit dem Ammoniak temporär speichernden Material besitzt. Die Ammoniak temporär speichernde Schicht kann dabei in Form eines wie oben dargestellten SCR-Katalysators ausgebildet sein. Besonders vorteilhaft haben sich hier mit Kupfer oder Eisen übergangsmetallausgetauschte Zeolithe des CHA, BEA bzw. AEI herausgestellt. Die Oxidationsbeschichtung weist im Wesentlichen die Metalle Rh, Pt und/oder Pd auf, die vorzugsweise auf hochoberflächigem aktiven Aluminium geträgert sind. Aktives Aluminium enthält bis zu 10 Gew.-% bezogen auf das Aluminiumoxid an Lanthan und/oder $SiO_2$ als Beimengung. Das Beladungsverhältnis der temporär Ammoniak speichernden Beschichtung zur oxidativen Beschichtung sollte zwischen 10:1 bis 1:10, mehr bevorzugt 9:1 - 1:9 und ganz bevorzugt zwischen 8:1 und 1:8 liegen. Hierdurch und durch die Wahl der Edelmetalle lässt sich die oxidative Wirkung der oxidativen Beschichtung gegenüber der reduzierenden Wirkung der temporär Ammoniak speichernden Schicht gut austarieren, um bevorzugt Stickstoff generieren zu können und eine Überoxidation des Ammoniaks zu klimaschädlichem Lachgas zu vermeiden.

Es kann ebenfalls von Vorteil sein, wenn den Ammoniak temporär speichernden Materialien auf dem KAT auch solche zugefügt werden, die befähigt sind, Sauerstoff zu speichern. Letzteres sind die in den TWCs in der Regel eingesetzten Sauerstoffspeichermaterialien. Diese bewirken die Bereitstellung einer sauerstoffreicheren Umgebung, die für die Oxidation von Ammoniak vorteilhaft ist. Entsprechende Materialien sind u.a. in der EP2007682A1, EP1921044A2, US6468941B1, US6585944B1 und US20050282698A1 beschrieben. Vorzugsweise kommen diesbezüglich Ceroxide, Cer-Zirkonmischoxide oder mit La, Y, Pr, Nd dotierte Cer bzw. Cer-Zirkonmischoxide in Betracht. Die Menge an Sauerstoff speicherndem Material kann vom Fachmann bemessen werden, sollte aber nicht unter 0,05 g/g, vorzugsweise 0,1 g/g bezogen auf das Gewicht des Ammoniak temporär speichernden Materials eingesetzt werden.

TWC1 und TWC2 sind moderne Drei-Wege-Katalysatoren. Der Fachmann weiß, welche er für den vorliegenden Zweck einsetzen würde (siehe z.B. WO2019121994A1, WO2019121995A1, WO9535152A1, WO2008000449A2, EP0885650A2, EP1046423A2, EP1726359A1, EP1541220A1, EP1900416B1, EP3045226A1, WO2009012348A1 und EP1974809B1). Drei-Wege-Katalysatoren bestehen im Wesentlichen aus den Komponenten Edelmetall, hoch-oberfläches Trägeroxid und Sauerstoffspeichermaterial. Die Sauerstoffspeichermaterialien sind insbesondere solche, in denen Cer/Zirkonium/Seltenerdmetall-Mischoxiden vorkommen. Als Seltenerdmetalloxid kommen beispielsweise Lanthanoxid, Yttriumoxid, Praseodymoxid, Neodymoxid, Samariumoxid und Mischungen von einem oder mehreren dieser Metalloxide in Betracht. Bevorzugt sind Lanthanoxid, Yttriumoxid, Neodymoxid und Mischungen von einem oder mehreren dieser Metalloxide. Besonders bevorzugt sind Lanthanoxid, Yttriumoxid und ganz besonders bevorzugt ist eine Mischung von Lanthanoxid und Yttriumoxid in diesem Zusammenhang.

Als Trägeroxid für katalytisch aktive Metalle kommen für den Fachmann hochoberflächige, temperaturstabile Oxide in Betracht. In der Regel sind dies Aluminiumoxide, Siliziumoxide, Zirkonoxide oder Titanoxide oder Mischungen derselben. Insbesondere aktives Aluminiumoxid ist dem Fachmann in diesem Zusammenhang bekannt. Es bezeichnet insbesondere γ-Aluminiumoxid mit einer Oberfläche von 100 bis 200 m$^2$/g. Aktives Aluminiumoxid ist in der Literatur vielfach beschrieben und am Markt erhältlich. Es enthält in der Regel Siliziumoxid oder Lanthanoxid als Stabilisator in einer Menge von bis zu 10 Gew.-% bezogen auf das Aluminiumoxid. Drei-Wege-Katalysatoren enthalten als katalytisch aktive Komponenten zumeist Metalle der Platingruppe, wie Pt, Pd und Rh, wobei Pd und Rh besonders bevorzugt sind. Die katalytisch aktiven Metalle sind häufig hochdispers auf den hochoberflächigen Oxiden und den Sauerstoffspeichermaterialien abgeschieden. Besonders bevorzugt ist es, wenn die Edelmetalle auf dem Sauerstoffspeichermaterial vorfixiert werden, bevor dieses mit den übrigen Bestandteilen in die Beschichtungsmischung vermengt wird. Bei den TWCs sind gezonte oder gelayerte Ausführungsform mittlerweile der Normalfall. In einer bevorzugten Ausführungsform besitzt zumindest der TWC1 einen 2-Schichtaufbau mit zwei unterschiedlichen Drei-Wege-Beschichtungen, vorzugsweise wie in EP3247493A1 beschrieben.

Die Drei-Wege-Katalysatoren werden durch einen dem Fachmann geläufigen Beschichtungsschritt vorzugsweise auf ein Durchflusssubstrat aufgebracht. Durchflusssubstrate sind im Stand der Technik übliche Katalysatorträger, die aus Metall (corrugated carrier, z.B. WO17153239A1, WO16057285A1, WO15121910A1 und darin zitierte Literatur) oder keramischen Materialien bestehen können. Bevorzugt werden feuerfeste Keramiken wie zum Beispiel Cordierit, Siliziumcarbit oder Aluminiumtitanat etc. eingesetzt. Die Anzahl der Kanäle pro Fläche wird durch die Zelldichte charakterisiert, welche üblicher Weise zwischen 300 und 900 Zellen pro Quadrat inch (cells per square inch, cpsi) liegt. Die Wanddicke der Kanalwände beträgt bei Keramiken zwischen 0,5 - 0,05 mm.

Der TWC1 ist erfindungsgemäß vorzugsweise motornah verbaut. Dies bedeutet, dass zwischen dem Turbolader und der einlassseitigen Stirnfläche des TWC1 lediglich 1 - 40 cm Entfernung liegen. Bevorzugt ist der Katalysator TWC1 2 - 30 cm und ganz bevorzugt 3 - 20 cm vom Turbolader entfernt verbaut. Der GPF kann in einigem Abstand vom TWC1, z.B. im Unterboden des Fahrzeugs verbaut werden. Bevorzugt ist jedoch die Ausführungsform, in der der GPF recht nahe am auslassseitigen Ende des TWC1 verbaut wird. Bevorzugt ist der Abstand zwischen auslassseitiger Stirnfläche des TWC1 und GPF 1 - 60 cm, mehr bevorzugt 2 - 50 cm und ganz bevorzugt 3 - 40 cm.

Der TWC2 ist entweder direkt nach dem Filter in einer motornahen Position verbaut, oder kommt vorzugsweise im Unterboden des Fahrzeugs im Abgassystem zum Einsatz. Dadurch ist die Temperaturbelastung dieses TWCs eine andere als die des TWC1. Aus diesem Grund unterscheiden sind die beiden TWCs in einigen Charakteristika voneinander. Bevorzugt weist der TWC2 eine geringere Washcoatbeladung als der TWC1 auf, insbesondere um einen Faktor zwischen 1,25 - 4, mehr bevorzugt 1,5 - 3. Bevorzugt besteht der TWC1 aus mindestens 2-4 verschiedenen Drei-Wege-Katalysatorschichten oder Zonen, während der TWC2 bevorzugt aus mindestens 1-2 Drei-Wege-Katalysatorschichten oder Zonen besteht. Die TWCs weisen eine übliche Washcoatbeladung auf. Diese liegt vorzugsweise bei 100 - 400 g/L, mehr bevorzugt 125 - 375 g/L und ganz bevorzugt 150 - 325 g/L. In einer weiteren Ausführungsform hat es sich als vorteilhaft erwiesen, wenn die Washcoatbeladung in g/L des TWC1 größer ist als die des TWC2, insbesondere um einen Faktor zwischen 1,25 - 4, mehr bevorzugt 1,5 - 3. Zudem ist die Edelmetallkonzentration in g/L auf dem TWC1 bevorzugt größer als auf dem TWC2, insbesondere um einen Faktor 1,25 - 20, mehr bevorzugt 1,5 - 10.

Der GPF hat die Form eines Wandflussfilters. Als Wandflussfilter können alle im Stand der Technik üblichen keramischen Materialien eingesetzt werden. Bevorzugt werden poröse Wandflussfiltersubstrate aus Cordierit, Siliziumcarbid oder Aluminiumtitanat eingesetzt. Diese Wandflussfiltersubstrate weisen An- und Abströmkanäle auf, wobei jeweils die abströmseitigen Enden der Anströmkanäle und die anströmseitigen Enden der Abströmkanäle gegeneinander versetzt mit gasdichten "Stopfen" verschlossen sind. Hierdurch wird das zu reinigende Abgas, das das Filtersubstrat durchströmt, zum Durchtritt durch die poröse Wand zwischen An- und Abströmkanal gezwungen, was eine exzellente Partikelfilterwirkung bedingt. Durch die Porosität, Poren-/Radienverteilung, und Dicke der Wand kann die Filtrationseigenschaft für Partikel ausgelegt werden. Die Porosität der Wandflussfilter beträgt in der Regel mehr als 40%, generell von 40% bis 75%, besonders von 45% to 70% [gemessen nach DIN 66133 - neueste Fassung am Anmeldetag]. Die durchschnittliche Porengröße (Durchmesser) beträgt wenigstens 3 μm, z.B. von 3 μm bis 34 μm, bevorzugt mehr als 5 μm, insbesondere von 5 μm bis 28 μm oder von 7 μm bis 22 μm [gemessen nach DIN 66134 neueste Fassung am Anmeldetag].

Der GPF kann unbeschichtet, mit einer trockenen Pulverbeschichtung oder mit einer ggf. zusätzlichen, naßtechnisch hergestellten Beschichtung versehen im erfindungsgemäßen System zum Einsatz kommen (EP3595796A1, WO2020200394A1, WO2020200397A1). Entsprechende naßtechnisch hergestellte Filter mit verbesserter Filterwirkung werden in der WO2019121375A1 bzw. WO2020200398A1 vorgestellt. Alternativ oder kumulativ kommt ebenfalls die Beschichtung mit einem trockenen Pulver in Betracht (siehe hierzu z.B. DE102018108346A1, US8277880B2). In erste Linie wird durch derartige Beschichtungen die Filtrationseffizienz des Filters verbessert, ohne den Abgasgegendruck des Filters über die Maßen zu verschlechtern. Der GPF kann jedoch auch eine katalytische Beschichtung beherbergen. Ein Katalysatormaterial kann in Form einer Beschichtungssuspension auf und/oder in die porösen Wände der An- und/oder Abströmkanäle aufgetragen werden. In der Regel wird es sich dabei vorliegend um eine Beschichtung mit einem Drei-Wege-Katalysator handeln. Die Zusammensetzung entspricht den oben erfolgten Ausführungen. Somit können alle Aggregate im erfindungsgemäßen Abgasreinigungssystem katalytisch aktive Edelmetalle der oben angegebenen Provenienz aufweisen. In einer vorteilhaften Ausführungsform hat der GPF dabei eine höhere Edelmetallkonzentration in g/L Substratvolumen als der TWC2. Sofern vorhanden besitzt der KAT eine niedrigere Edelmetallkonzentration in g/L Substratvolumen als der TWC2. Beide genannten Ausführungsformen können je nach Anwendungsfall jedoch auch reziprok gesehen vorkommen. In einem besonderen Fall kann der TWC2 so ausgebildet sein, dass er lediglich Rhodium als Edelmetall aufweist.

Sofern der GPF mit einer Beschichtung versehen ist, so liegt die Washcoatbeladung bei 10 - 200 g/L, vorzugsweise 20 - 175 g/L und ganz bevorzugt 25 - 150 g/L. Dabei ist es von Vorteil, wenn das Substrat mit den Materialien zum temporären Speichern von Ammoniak (KAT) eine größere Washcoatbeladung in g/L aufweist als der GPF.

"Electrically heated catalyst" (EHC) sind spezielle Katalysatorkörper, die durch das Anlegen einer Stromquelle erwärmt werden können. Der Vorteil derartiger Systeme liegt darin, dass Betriebszustände des Abgasreinigungssystems vermieden werden, in denen die Katalysatoren aufgrund niedriger Temperaturen nicht oder nicht mehr ausreichend aktiv sind. Solche Betriebszustände existieren im Wesentlichen, wenn das Fahrzeug erst kürzlich gestartet wurde. Durch schnelles elektrisches Aufheizen der Katalysatorsubstrate, können die darauf befindlichen Katalysatoren auf Umsetzungstemperatur gebracht werden und so der Ausstoß unumgesetzter Schadstoffe verringert werden. Vorliegend ist es besonders vorteilhaft, wenn zumindest eines der im System vorhandenen Katalysatorsubstrate (TWC1, GPF, TWC2 oder KAT) ein elektrisch beheizbares Substrat ist. Ganz bevorzugt ist, wenn dies der TWC1 ist. Dieser ist aufgrund seiner Positionierung im System als erstes auf Arbeitstemperatur. Daher ist der Einsatzes von Strom hier am geringsten, was gerade im Hinblick auf hybride Anwendung äußerst bevorzugt ist, da die Batterie geschont werden kann. Entsprechende EHC-Systeme in Hybridvehikeln sind dem Fachmann bekannt (US8776500BB).

Um die Schadstoffe, welche in den Kaltlaufbedingungen vom Fahrzeug emittiert werde, weiter zu reduzieren, kann sich im erfindungsgemäßen Abgasreinigungssystem, vorzugsweise im TWC1 eine sogenannte Kohlenwasserstofffalle (hydrocarbon trap; HCT) befinden. Die HCT nimmt aus dem Abgas die emittierten Kohlenwasserstoffe bei niedrigen Temperaturen von weniger als 200°C, vorzugsweise weniger als 250°C auf (Nettoaufnahme). Die HCT kann mit einem Oxidationskatalysator vergesellschaftet sein. Als solches kommen Platin und/oder Rhodium und/oder Palladium in Frage. Als Ausgestaltungen und Materialien für die HCT kommen insbesondere solche aus der US20190351397AA, US20190351398AA oder US20190351393AA in Frage. Als Speichermaterial werden äußerst vorzugsweise Zeolithe wie Beta, die mit einem Übergangsmetall wie Eisen oder Kupfer ausgetauscht sind, verwendet.

Ebenfalls von Vorteil ist es, wenn im erfindungsgemäßen Abgasreinigungssystem eine Funktionalität zur temporären Speicherung von Stickoxide vorhanden ist. Hierdurch lässt sich verhindern, dass während sogenannter Kaltlaufphasen des Fahrzeugs übermäßig viele unumgesetzte Stickoxide emittiert werden. Diese werden dann eingespeichert und späterhin, wenn ausreichend Temperatur oder Reduktionsmittel im Abgassystem vorhanden ist, entweder durch eine reduktive Regeneration (sogenannte NOx-Speicherkatalysatoren; NSC) oder durch thermale Desorption (passive NOx Speicher; PNA) und Reduktion über einem Drei-Wege-Katalysator vermindert. Bzgl. der Wirkungsweise und den vorzugsweise einzusetzenden Materialien wird auf die einschlägige Literatur verwiesen (WO2020058265A1; EP3695902A1; US2019120109AA; US2018318763AA; US2015266002AA; WO2019134958A1).

Ebenfalls Gegenstand der vorliegenden Erfindung bildet ein Verfahren zur Reinigung von Abgasen eines überwiegend stöchiometrisch betriebenen Verbrennungsmotors, bei dem das Abgas über ein Abgasreinigungssystem nach einem der vorhergehenden Ansprüche geleitet wird. Die für das System benannten bevorzugten und alternativen Ausführungsformen gelten mutatis mutandis auch für das Verfahren.

Mit dem Abgassystem und dem vorgestellten Verfahren gemäß vorliegender Erfindung ist es möglich, die Abgasgrenzwerte zukünftiger noch strengerer Abgasnormen einhalten zu können. Neben den Standardwerten wie HC, CO, NOx und Ruß erlaubt das erfindungsgemäße System auch die Reduzierung sogenannter sekundärer Schadstoffe, wie z.B. $NH_3$, $N_2O$ und andere. Im Speziellen die motornahe Anordnung des TWC1 ermöglicht sehr hohe Umsatzraten für die emissionsrelevanten Schadstoffe CO, HC und NOx. Der zusätzliche TWC2 kann ggf. unterstützend wirken und vor allen in Betriebspunkten mit hoher Last und Abgasmassenströmen helfen, die hohen Konversionsraten von CO, HC und NOx sicherzustellen. Die Verwendung des Partikelfilters hingegen, führt zu signifikanten Abscheideraten von Ruß, sodass die gegebenen Emissionsgrenzwerte sicher eingehalten werden können. Dem Fachmann ist hinlänglich bekannt, dass klassische Dreiwegekatalysatoren in den entsprechenden Temperaturregimen und Motorbetriebspunkten gewisse Mengen an Ammoniak erzeugen können. Schließlich wird durch Verwendung von Ammoniak temporär speichernden Materialien, z.B. in einem separaten Katalysatorsubstrat (KAT) sichergestellt, dass vor allem sekundäre Schadstoffe wie Ammoniak zusätzlich signifikant reduziert werden können. Damit ist ein solches System prädestiniert dafür in Automobilen eingesetzt zu werden, die zukünftige strenge Abgasgrenzwerte für eine Zulassung einhalten müssen.

Figuren:

Fig. 1: Hier wird die typische Konzentrationskurve einer Ammoniakabsorptionsmessung gezeigt.

Fig. 2: Zeigt eine Ausführungsform eines erfindungsgemäßen Systems mit KAT abstromseitig zum TWC2.

Fig. 3: Zeigt eine Ausführungsform eines erfindungsgemäßen Systems mit KAT zwischen GPF und TWC2.

Fig. 4: Zeigt eine Ausführungsform eines erfindungsgemäßen Systems mit KAT aufstromseitig zum GPF.

Fig. 5: Gemittelte Beutelemissionen für THC/NMHC/CO/NOx der beiden Abgasnachbehandlungssysteme TWC-GPF-TWC und TWC-GPF-TWC+KAT im Vergleich.

Fig. 6: Gemittelte Emissionen für $NH_3$ und $N_2O$ der beiden Abgasnachbehandlungssysteme TWC-GPF-TWC und TWC-GPF-TWC+KAT im Vergleich.

Fig. 7: Gemittelte kumulierte Modalverläufe der Emissionen für $NH_3$ und $N_2O$ der beiden Abgasnachbehandlungssysteme TWC-GPF-TWC (schwarz) und TWC-GPF-TWC+KAT (blau) im Vergleich.

Beispiele:

Bestimmung der Ammoniakspeicherkapazität

Diese wird experimentell in einem Strömungsrohrreaktor bestimmt. Zur Vermeidung von unerwünschter Ammoniakoxidation am Reaktormaterial wird ein Reaktor aus Quarzglas verwendet. Aus dem Bereich des Katalysators, dessen Ammoniakspeicherkapazität bestimmt werden soll, wird ein Bohrkern als Prüfling entnommen. Bevorzugt wird ein Bohrkern mit 1 Zoll Durchmesser und 3 Zoll Länge als Prüfling entnommen. Der Bohrkern wird in den Strömungsrohrreaktor eingesetzt und bei einer Temperatur von 600 °C in einer Gasatmosphäre aus 500 ppm Stickstoffmonoxid, 5 Vol.-% Sauerstoff, 5 Vol.-% Wasser und Rest Stickstoff mit einer Raumgeschwindigkeit von 30000 h$^{-1}$ für 10 Minuten konditioniert. Anschließend wird in einem Gasgemisch aus 0 Vol.-% Sauerstoff, 5 Vol.-% Wasser und Rest Stickstoff mit einer Raumgeschwindigkeit von 30000 h$^{-1}$ die Messtemperatur von 200 °C angefahren. Nach Stabilisierung der Temperatur wird die $NH_3$-Speicherphase durch Aufschalten eines Gasgemisch aus 450 ppm Ammoniak, 0 Vol.-% Sauerstoff, 5 Vol.-% Wasser und Rest Stickstoff mit einer Raumgeschwindigkeit von 30000 h$^{-1}$ eingeleitet. Dieses Gasgemisch bleibt so lange aufgeschaltet, bis abströmseitig vom Prüfling eine stationäre Ammoniakdurchbruchskonzentration verzeichnet wird. Die auf dem Prüfling eingespeicherte Masse an Ammoniak wird aus der aufgezeichneten Ammoniak-Durchbruchskurve durch Integration vom Start der $NH_3$-Speicherphase bis zum Erreichen der Stationarität unter Einbeziehung der gemessenen stationären $NH_3$-Durchbruchskonzentration sowie dem bekannten Volumenfluss berechnet (schraffierte Fläche in der Figur 1). Die Ammoniakspeicherkapazität wird berechnet als Quotient aus der eingespeicherten Masse an Ammoniak, geteilt durch das Volumen des getesteten Bohrkerns.

Experimentelle Daten

Ein Euro 6 Benzinfahrzeug mit 1,5L DI Motor wurde mit einem künstlich auf End-of-Lifegealterten Abgassystem bestehend aus einem ersten motornahen TWC mit 1,26L Katalysatorvolumen (Substratdimensionen 118,4mmx114,3mm) und einer konventionellen Dreiwege-Beschichtung mit 1,77 g/L Edelmetall (0/92/8 Pt/Pd/Rh), einem abströmseitig angeordneten, unbeschichteten GPF mit 1,39L Katalysatorvolumen (Substratdimensionen 132,1mmx101,6mm) und einem im Unterboden angeordneten, zweiten TWC mit 1,26L Katalysatorvolumen (Substratdimensionen 118,4mmx114,3mm) und einer konventionellen Dreiwege-Beschichtung mit 0,83 g/L Edelmetall (0/80/20 Pt/Pd/Rh) und auf einem Rollenprüfstand in einem RTS aggressive Fahrzyklus gefahren. Dieses System wird als TWC-GPF-TWC Referenzsystem bezeichnet und hat ein Gesamtsubstratvolumen von 3,9L. Dabei wurden die Emissionen THC, NMHC, CO, NOx, $NH_3$ und $N_2O$ gemessen, die dafür zu verwendende Messtechnik ist dem Fachmann bekannt. Dargestellt ist jeweils der Mittelwert aus mehreren Messungen.

Dem gegenüber gestellt wurde ein System nach den hier genannten Patentansprüchen. Dazu wurde dasselbe Euro 6 Benzinfahrzeug mit 1,5L DI Motor mit einem künstlich auf End-of-Life gealterten Abgassystem bestehend aus einem ersten motornahen TWC mit 1,26L Katalysatorvolumen (Substratdimensionen 118,4mmx114,3mm) und einer konventionellen Dreiwege-Beschichtung mit 1,77 g/L Edelmetall (0/92/8 Pt/Pd/Rh), einem abströmseitig angeordneten, unbeschichteten GPF mit 1,39L Katalysatorvolumen (Substratdimensionen 132,1mmx101,6mm), einem im Unterboden angeordneten zweiten TWC mit 0,63L Katalysatorvolumen (Substratdimensionen 118,4mmx57,2mm) und einer konventionellen Dreiwege-Beschichtung mit 0,83 g/L Edelmetall (0/80/20 Pt/Pd/Rh) und einem abströmseitig davon angeordneten KAT mit 0,63L Katalysatorvolumen (Substratdimensionen 118,4mmx57,2mm) und einer Beschichtung, die zusätzlich temporär Ammoniak speichern kann, mit 0,11 g/L Edelmetall (100/0/0 Pt/Pd/Rh). Es wurde auf einem Rollenprüfstand in einem RTS aggressive Fahrzyklus gefahren. Dieses System wird als TWC-GPF-TWC+KAT bezeichnet und hat ein Gesamtsubstratvolumen von 3,9L. Dabei wurden die Emissionen THC, NMHC, CO, NOx, $NH_3$ und $N_2O$ gemessen, die dafür zu verwendende Messtechnik ist dem Fachmann bekannt. Dargestellt ist jeweils der Mittelwert aus mehreren Messungen.

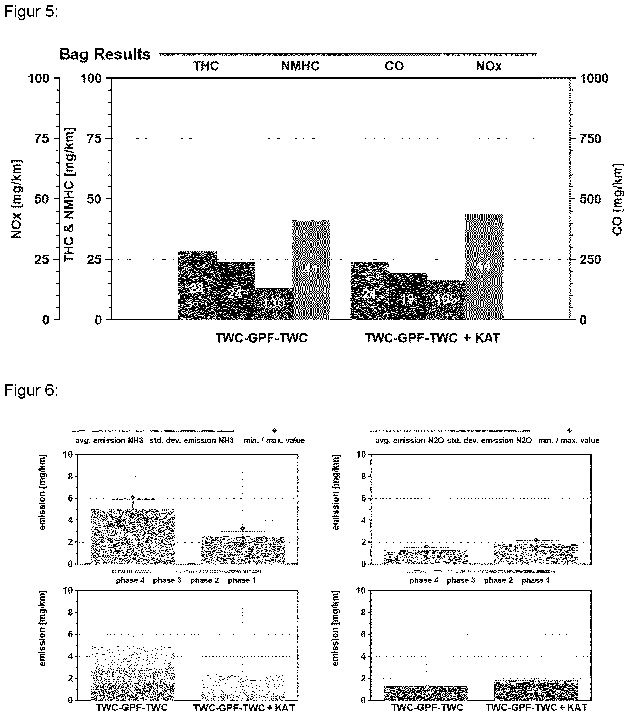

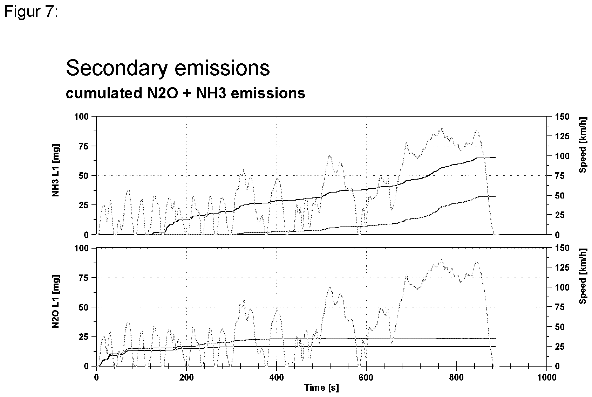

Figur 5 zeigt eine vergleichbare Performance des TWC-GPF-TWC+KAT Systems gegenüber dem TWC-GPF-TWC Referenzsystem. In Figur 6 sind die sogenannten Sekundäremissionen von $NH_3$ und $N_2O$ gezeigt, wobei das TWC-GPF-TWC+KAT System die $NH_3$ Emissionen um mehr als die Hälfte reduzieren kann, während die $N_2O$ Emissionen nur leicht ansteigen. Dieses Verhalten wird noch deutlicher in Figur 7, in der die gemittelten kumulierten Modalemissionen für $NH_3$ und $N_2O$ über den gesamten Fahrzyklus abgebildet sind. Dieser Effekt wird bei gleichem Gesamtsubstratvolumen der beiden verglichenen Systeme erreicht, das heißt bei halbiertem TWC2 des TWC-GPF-TWC+KAT Systems verglichen mit dem des TWC-GPF-TWC Referenzsystems. Bei gleichem Volumen des TWC2 in beiden Systemen ist daher mit einem noch verstärkten Vorteil für das TWC-GPF-TWC+KAT Systems zu rechnen.

**Patentansprüche**

1. Abgasreinigungssystem zur Reinigung von Abgasen eines überwiegend stöchiometrisch betriebenen Verbrennungsmotors aufweisend einen motornahen TWC1 auf einem Durchflusssubstrat, einen abstromseitig zum TWC1 angebrachten GPF als Wandflussfilter und abstromseitig zum GPF einen weiteren TWC2 auf einem Durchflusssubstrat, wobei

   das System zusätzlich Materialien zum temporären Speichern von Ammoniak ausweist,
   **dadurch gekennzeichnet, dass**
   die Materialien zum temporären Speichern von Ammoniak auf einem separaten Durchflusssubstrat angeordnet sind und letzteres abstromseitig zum TWC2 angeordnet ist.

2. System nach Anspruch 1,
   **dadurch gekennzeichnet, dass**
   durch dieses zusätzliche Material die Ammoniakspeicherfähigkeit auf mindestens 0,25 g Ammoniak pro L Substratvolumen erhöht wird.

3. System nach Anspruch 1 und/oder 2,
   **dadurch gekennzeichnet, dass**
   die Materialien zum temporären Speichern von Ammoniak in einer Menge von 50 - 350 g/L Substratvolumen im System vorhanden sind.

4. System nach einem der vorhergehenden Ansprüche,
   **dadurch gekennzeichnet, dass**
   die Materialien zum temporären Speichern von Ammoniak Materialien ausgewählt aus der Gruppe bestehend aus Zeolithen oder zeolithähnlichen Materialien aufweisen.

5. System nach einem der vorhergehenden Ansprüche,
   **dadurch gekennzeichnet, dass**
   die Materialien zum temporären Speichern von Ammoniak ebenfalls Katalysatoren zur Oxidation von $NH_3$ zu $N_2$ aufweisen.

6. System nach einem der vorhergehenden Ansprüche,
   **dadurch gekennzeichnet, dass**
   das Substrat mit den Materialien zum temporären Speichern von Ammoniak einen Anteil von 5 - 30 Vol.-% an dem Gesamtvolumen der Substrate im Abgasreinigungssystem ausmacht.

7. System nach Anspruch 6,
   **dadurch gekennzeichnet, dass**
   das Substrat mit den Materialien zum temporären Speichern von Ammoniak eine größere Washcoatbeladung in g/L aufweist als der GPF.

8. System nach einem der vorhergehenden Ansprüche,
   **dadurch gekennzeichnet, dass**
   mindestens ein Substrat elektrisch beheizbar ist.

**9.** Verfahren zur Reinigung von Abgasen eines überwiegend stöchiometrisch betriebenen Verbrennungsmotors, bei dem das Abgas über ein Abgasreinigungssystem nach einem der vorhergehenden Ansprüche geleitet wird.

**Claims**

**1.** Exhaust gas purification system for purifying exhaust gases of a predominantly stoichiometrically operated internal combustion engine having a TWC1 near the engine on a through-flow substrate, a GPF attached downstream of the TWC1 as a wall-flow filter, and a further TWC2 on a through-flow substrate downstream of the GPF, the system also having materials for temporarily storing ammonia,
**characterized in that**
the materials for temporarily storing ammonia are arranged on a separate through-flow substrate and the latter is arranged downstream of the TWC2.

**2.** System according to claim 1,
**characterized in that**
this additional material increases the ammonia storage capability to at least 0.25 g of ammonia per L of substrate volume.

**3.** System according to claim 1 and/or 2,
**characterized in that**
the materials for temporarily storing ammonia are present in the system in an amount of 50 - 350 g/L substrate volume.

**4.** System according to any one of the preceding claims,
**characterized in that**
the materials for temporarily storing ammonia have materials selected from the group consisting of zeolites or zeolite-like materials.

**5.** System according to any one of the preceding claims,
**characterized in that**
the materials for temporarily storing ammonia also have catalysts for oxidizing $NH_3$ to form $N_2$.

**6.** System according to any one of the preceding claims,
**characterized in that**
the substrate having the materials for temporarily storing ammonia accounts for a fraction of 5 - 30 vol.% of the total volume of substrates in the exhaust gas purification system.

**7.** System according to claim 6,
**characterized in that**
the substrate having the materials for temporarily storing ammonia has a greater washcoat loading in g/L than the GPF.

**8.** System according to any one of the preceding claims,
**characterized in that**
at least one substrate can be electrically heated.

**9.** Method for purifying exhaust gases of a predominantly stoichiometrically operated internal combustion engine, in which the exhaust gas is passed through an exhaust gas purification system according to any one of the preceding claims.

**Revendications**

**1.** Système d'épuration de gaz d'échappement permettant l'épuration de gaz d'échappement d'un moteur à combustion interne fonctionnant principalement de manière stœchiométrique, présentant un TWC1 proche du moteur sur un substrat d'écoulement, un GPF monté en aval du TWC1 comme filtre à écoulement sur paroi et, en aval du GPF, un autre TWC2 sur un substrat d'écoulement, dans lequel le système présente des matériaux supplémentaires permettant le stockage temporaire d'ammoniac,

**caractérisé en ce que**
les matériaux permettant le stockage temporaire d'ammoniac sont disposés sur un substrat d'écoulement séparé et ce dernier est disposé en aval du TWC2.

2. Système selon la revendication 1,
**caractérisé en ce que**
la capacité de stockage d'ammoniac est augmentée à au moins 0,25 g d'ammoniac par L de volume de substrat par ledit matériau supplémentaire.

3. Système selon la revendication 1 et/ou 2,
**caractérisé en ce que**
les matériaux permettant le stockage temporaire d'ammoniac sont présents dans le système à raison de 50 à 350 g/L de volume de substrat.

4. Système selon l'une des revendications précédentes,
**caractérisé en ce que**
les matériaux permettant le stockage temporaire d'ammoniac présentent des matériaux choisis dans le groupe constitué de zéolithes ou de matériaux similaires à la zéolithe.

5. Système selon l'une des revendications précédentes,
**caractérisé en ce que**
les matériaux permettant le stockage temporaire d'ammoniac présentent également des catalyseurs permettant l'oxydation de l'ammoniac $NH_3$ en $N_2$.

6. Système selon l'une des revendications précédentes,
**caractérisé en ce que**
le substrat comportant les matériaux permettant le stockage temporaire d'ammoniac représente une proportion allant de 5 à 30 % en volume du volume total des substrats dans le système d'épuration des gaz d'échappement.

7. Système selon la revendication 6,
**caractérisé en ce que**
le substrat comportant les matériaux permettant le stockage temporaire d'ammoniac présente une charge de revêtement catalytique en g/L supérieure à celle du GPF.

8. Système selon l'une des revendications précédentes,
**caractérisé en ce que**
au moins un substrat peut être chauffé électriquement.

9. Procédé permettant l'épuration de gaz d'échappement d'un moteur à combustion interne fonctionnant principalement de manière stœchiométrique, dans lequel les gaz d'échappement sont acheminés par l'intermédiaire d'un système d'épuration de gaz d'échappement selon l'une des revendications précédentes.

Figur 1:

NH₃-Konzentration
nach Katalysator [ppm]

Dosierte NH₃-Konzentration

Stationäre
NH₃-Durchbruchs-
konzentration

0 ppm

Zeit

Start der NH₃-Speicherphase

Figur 2:

TWC1    GPF    TWC2    KAT

Figur 3:

TWC1    GPF    KAT    TWC2

Figur 4:

TWC1    KAT    GPF    TWC2

Figur 5:

Figur 6:

Figur 7:

## Secondary emissions
### cumulated N2O + NH3 emissions

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1657410 A2
- EP 2042226 A2
- EP 3639919 A1
- DE 102016112657 A1
- WO 2011131324 A1
- WO 2020069548 A1
- US 10066576 B2
- US 10914217 B2
- DE 102019204744 A1
- US 2010107606 A1
- EP 0324082 A1
- US 20060010857 AA
- WO 2004076829 A1
- EP 2012061382 W
- WO 2008106518 A2
- WO 2008106519 A1
- US 5120695 A
- EP 1892395 A1
- EP 1882832 A2
- EP 1876331 A2
- WO 12135871 A1
- US 2011271664 AA
- WO 11110919 A1
- EP 2007682 A1
- EP 1921044 A2
- US 6468941 B1
- US 6585944 B1
- US 20050282698 A1
- WO 2019121994 A1
- WO 2019121995 A1
- WO 9535152 A1

- WO 2008000449 A2
- EP 0885650 A2
- EP 1046423 A2
- EP 1726359 A1
- EP 1541220 A1
- EP 1900416 B1
- EP 3045226 A1
- WO 2009012348 A1
- EP 1974809 B1
- EP 3247493 A1
- WO 17153239 A1
- WO 16057285 A1
- WO 15121910 A1
- EP 3595796 A1
- WO 2020200394 A1
- WO 2020200397 A1
- WO 2019121375 A1
- WO 2020200398 A1
- DE 102018108346 A1
- US 8277880 B2
- US 8776500 BB
- US 20190351397 AA
- US 20190351398 AA
- US 20190351393 AA
- WO 2020058265 A1
- EP 3695902 A1
- US 2019120109 AA
- US 2018318763 AA
- US 2015266002 AA
- WO 2019134958 A1

**In der Beschreibung aufgeführte Nicht-Patentliteratur**

- **W.M. MEIER**. *Pure & Appl. Chem.*, 1986, vol. 58 (10), 1323-1328